# EUROPÄISCHE PATENTSCHRIFT

(11) **EP 3 484 094 B1**
(45) Veröffentlichungstag und Bekanntmachung des Hinweises auf die Patenterteilung: **30.12.2020**
(21) Anmeldenummer: 18204277.0
(22) Anmeldetag: 05.11.2018
(51) Int. Cl.: H04L 9/00, H04L 9/06, G09C 1/00

(54) **ÜBERTRAGUNGSVORRICHTUNG ZUM ÜBERTRAGEN EINES DATENPAKETS**
TRANSMISSION DEVICE FOR TRANSMITTING A DATA PACKET
DISPOSITIF DE TRANSFERT PERMETTANT DE TRANSFÉRER UN PAQUET DE DONNÉES

(30) Priorität: 10.11.2017 DE 102017126346
(43) Veröffentlichungstag der Anmeldung: 15.05.2019
(73) Patentinhaber: Bundesdruckerei GmbH, 10969 Berlin (DE)
(72) Erfinder: WILKE, Andreas, 13509 Berlin (DE); KOMAROV, Ilya, 13507 Berlin (DE)
(74) Vertreter: Patentship Patentanwaltsgesellschaft mbH

(56) Entgegenhaltungen:
- US-A1- 2004 170 280
- Tim Edwards: "Discrete Wavelet Transformations: Theory and Implementation", IEEE Transactions on Signal Processing, 4. Juni 1992 (1992-06-04), Seiten 1398-1412, XP055568144, New York DOI: 10.1109/TSP.2005.843707 Gefunden im Internet: URL:http://opencircuitdesign.com/~tim/rese arch/wavelets/wavelets.ps [gefunden am 2019-03-12]
- DANILO GONÇALVES ET AL: "A Survey of Image Security in Wireless Sensor Networks", JOURNAL OF IMAGING, Bd. 1, Nr. 1, 26. Mai 2015 (2015-05-26), Seiten 4-30, XP055567783, DOI: 10.3390/jimaging1010004

## Beschreibung

Die Erfindung betrifft das Gebiet der Datenübertragung über einen Kommunikationskanal.

Die Offenlegungsschrift US 2004/0170280 A1 offenbart ein System und ein Verfahren zum Verschlüsseln und Entschlüsseln einer Nachricht unter Verwendung einer Wavelet-Transformation.

Die Druckschrift "Tim Edwards: "Discrete Wavelet Transforms: Theory and Implementation"; Stanford University, September 1991; Draft #2, June 4, 1992" beschäftigt sich mit dem theoretischen Hintergrund einer Wavelet-Transformation.

Die Druckschrift "Danilo Congalves ET AL: "A Survey of Image Security in Wireless Sensor Networks", Journal of Imaging, Bd. 1, Nr. 1, 26. Mai 2015 (2015-05-26), Seiten 4-30, XP055567783, DOI: 10.3390/jimaging1010004" beschäftigt sich mit der Sicherheit in Sensornetzwerken.

Zur geschützten Datenübertragung über einen Kommunikationskanal sind verschiedenste kryptographische Verfahren bekannt, welche auf digitalen Operationen basieren. Derartige kryptographische Verfahren, beispielsweise Verschlüsselungsverfahren wie AES (Advanced Encryption Standard), sind jedoch zunehmend kryptographischen Angriffen ausgesetzt, welche durch die steigende verfügbare Rechenleistung eines potenziellen Angreifers immer aussichtsreicher werden. Um auch in Zukunft eine geschützte Datenübertragung über einen Kommunikationskanal zu gewährleisten sind folglich alternative Ansätze wünschenswert.

Es ist daher eine Aufgabe der vorliegenden Erfindung, ein effizientes Konzept zum Übertragen eines Datenpakets über einen Kommunikationskanal zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis und schließt diese mit ein, dass die obige Aufgabe dadurch gelöst werden kann, dass ein zu übertragendes Datenpaket durch einen Funktionsterm bzw. einen transformierten Funktionsterm repräsentiert wird, wobei der transformierte Funktionsterm mittels einer Kommunikationsnachricht über den Kommunikationskanal übertragen wird. Die verwendete Funktionaltransformation und die zugehörige Funktionalrücktransformation bilden folglich ein geteiltes Geheimnis zwischen einer Übertragungsvorrichtung und einer Empfangsvorrichtung, wodurch eine geschützte Übertragung des Datenpakets über den Kommunikationskanal möglich wird.

Gemäß einem ersten Aspekt betrifft die Erfindung eine Übertragungsvorrichtung zum Übertragen eines Datenpakets über einen Kommunikationskanal. Die Übertragungsvorrichtung umfasst einen Speicher, in welchem eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Die Übertragungsvorrichtung umfasst ferner einen Prozessor, welcher ausgebildet ist, einen Funktionsterm aus der Mehrzahl von Funktionstermen auszuwählen, wobei der ausgewählte Funktionsterm einem Referenzdatenpaket zugeordnet ist, welches dem Datenpaket entspricht, den ausgewählten Funktionsterm unter Verwendung einer vorbestimmten Funktionaltransformation zu transformieren, um einen transformierten Funktionsterm zu erhalten, und eine Kommunikationsnachricht zu erzeugen, wobei die Kommunikationsnachricht den transformierten Funktionsterm umfasst. Die Übertragungsvorrichtung umfasst zudem eine Kommunikationsschnittstelle, welche ausgebildet ist, die Kommunikationsnachricht über den Kommunikationskanal auszusenden, um das Datenpaket über den Kommunikationskanal zu übertragen.

Die Zuordnung zwischen der Mehrzahl von Funktionstermen und der Mehrzahl von Referenzdatenpaketen kann eineindeutig sein. Insbesondere können die jeweiligen Funktionsterme der Mehrzahl von Funktionstermen jeweils unterschiedlich sein. Für die Funktionaltransformation existiert eine entsprechende Funktionalrücktransformation. Ein jeweiliger Funktionsverlauf eines jeweiligen Funktionsterms kann durch eine freie Variable des jeweiligen Funktionsterms definiert sein.

Gemäß einer Ausführungsform ist der Prozessor ausgebildet, den ausgewählten Funktionsterm mittels eines Computeralgebrasystems, insbesondere mittels einer Programmbibliothek eines Computeralgebrasystems, symbolisch zu transformieren. Dadurch wird der Vorteil erreicht, dass die vorbestimmte Funktionaltransformation auch bei komplexen und umfangreichen Funktionstermen effizient durchgeführt werden kann.

Ein Computeralgebrasystem bezeichnet diesbezüglich ein Computerprogramm, welches u.a. der symbolischen Verarbeitung analytischer Funktionsterme und Ausdrücke dient. Die Programmbibliothek ermöglicht eine effiziente Einbindung und Nutzung der Funktionalität des Computeralgebrasystems. Die Programmbibliothek kann beispielsweise eine SymPy Programmbibliothek oder eine Symbolic C++ Programmbibliothek sein.

Gemäß einer Ausführungsform ist die vorbestimmte Funktionaltransformation eine umkehrbare Funktionaltransformation. Dadurch wird der Vorteil erreicht, dass zu der Funktionaltransformation eine zugehörige Funktionalrücktransformation existiert.

Gemäß einer Ausführungsform ist die vorbestimmte Funktionaltransformation eine Integraltransformation. Dadurch wird der Vorteil erreicht, dass der transformierte Funktionsterm effizient bestimmt werden kann.

Gemäß einer Ausführungsform ist die vorbestimmte Funktionaltransformation eine der folgenden Funktionaltransformationen: eine Wavelet-Transformation, eine Fourier-Transformation, eine Laplace-Transformation, eine Sinus-Transformation, oder eine Cosinus-Transformation. Dadurch wird der Vorteil erreicht, dass die vorbestimmte Funktionaltransformation effizient implementiert werden kann.

Gemäß einer Ausführungsform umfasst die Mehrzahl von Funktionstermen zumindest einen der folgenden Funktionsterme: einen exponentiellen Funktionsterm, einen gaußschen Funktionsterm, einen trigonometrischen Funktionsterm, einen hyperbolischen Funktionsterm, oder einen Polynomfunktionsterm, insbesondere einen Polynomfunktionsterm beliebigen Grades. Dadurch wird der Vorteil erreicht, dass die vorbestimmte Funktionaltransformation effizient durchgeführt werden kann.

Gemäß einer Ausführungsform umfasst die Mehrzahl von Funktionstermen zumindest einen der folgenden Funktionsterme: einen linearen Funktionsterm, einen quadratischen Funktionsterm, oder einen kubischen Funktionsterm. Dadurch wird der Vorteil erreicht, dass die vorbestimmte Funktionaltransformation effizient durchgeführt werden kann.

Gemäß einer Ausführungsform unterscheiden sich die Funktionsterme der Mehrzahl von Funktionstermen jeweils durch einen konstanten Term voneinander. Dadurch wird der Vorteil erreicht, dass das zu übertragende Datenpaket durch den konstanten Term innerhalb des Funktionsterms repräsentiert werden kann.

Gemäß einer Ausführungsform ist der konstante Term in jedem Funktionsterm jeweils durch ein Produkt eines ersten Faktors und eines zweiten Faktors gebildet, wobei der erste Faktor ein Näherungswert einer transzendenten Zahl, insbesondere der Kreiszahl *π*, ist. Der Näherungswert der transzendenten Zahl kann eine vorbestimmte Anzahl von Nachkommastellen aufweisen. Dadurch wird der Vorteil erreicht, dass die Eigenschaften transzendenter Zahlen zur geschützten Übertragung des Datenpakets genutzt werden können.

Gemäß einer Ausführungsform ist die Übertragungsvorrichtung ausgebildet, ein weiteres Datenpaket über den Kommunikationskanal zu übertragen, wobei der Prozessor ausgebildet ist, einen weiteren Funktionsterm aus der Mehrzahl von Funktionstermen auszuwählen, wobei der ausgewählte weitere Funktionsterm einem Referenzdatenpaket zugeordnet ist, welches dem weiteren Datenpaket entspricht, den ausgewählten weiteren Funktionsterm unter Verwendung der vorbestimmten Funktionaltransformation zu transformieren, um einen transformierten weiteren Funktionsterm zu erhalten, wobei die Kommunikationsnachricht den transformierten weiteren Funktionsterm umfasst. Dadurch wird der Vorteil erreicht, dass mittels einer Kommunikationsnachricht mehrere Datenpakete zugleich übertragen werden können.

Gemäß einer Ausführungsform ist der Prozessor ausgebildet, den ausgewählten weiteren Funktionsterm mittels eines Computeralgebrasystems, insbesondere mittels einer Programmbibliothek eines Computeralgebrasystems, symbolisch zu transformieren. Dadurch wird der Vorteil erreicht, dass die vorbestimmte Funktionaltransformation auch bei komplexen und umfangreichen weiteren Funktionstermen effizient durchgeführt werden kann.

Gemäß einer Ausführungsform ist der Prozessor ausgebildet, eine Anordnung, insbesondere eine Reihenfolge, des transformierten Funktionsterms und des transformierten weiteren Funktionsterms in der Kommunikationsnachricht gemäß eines vorbestimmten Veränderungsschemas zu verändern. Dadurch wird der Vorteil erreicht, dass das vorbestimmte Veränderungsschema und ein zugehöriges Rückveränderungsschema zusätzlich als geteiltes Geheimnis verwendet werden können.

Gemäß einer Ausführungsform ist die Kommunikationsnachricht durch eine Binärdatei, insbesondere eine Binärdatei in einem vorbestimmten Binärformat, gebildet. Dadurch wird der Vorteil erreicht, dass der transformierte Funktionsterm und/oder der transformierte weitere Funktionsterm effizient repräsentiert werden können. Das vorbestimmte Binärformat kann die Repräsentation des transformierten Funktionsterms und/oder des transformierten weiteren Funktionsterms in der Binärdatei definieren.

Gemäß einer Ausführungsform ist die Kommunikationsnachricht durch eine digitale Textdatei gebildet, wobei der transformierte Funktionsterm und/oder der transformierte weitere Funktionsterm gemäß einer vorbestimmten Formelsyntax formatiert ist. Dadurch wird der Vorteil erreicht, dass der transformierte Funktionsterm und/oder der transformierte weitere Funktionsterm effizient repräsentiert werden können.

Die digitale Textdatei kann beispielsweise eine ASCII-Zeichencodierung oder eine Unicode-Zeichencodierung aufweisen. Die vorbestimmte Formelsyntax kann beispielsweise eine MathML-Formelsyntax oder eine LaTeX-Formelsyntax sein.

Gemäß einem zweiten Aspekt betrifft die Erfindung eine Empfangsvorrichtung zum Empfangen eines Datenpakets über einen Kommunikationskanal. Die Empfangsvorrichtung umfasst einen Speicher, in welchem eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Die Empfangsvorrichtung umfasst ferner eine Kommunikationsschnittstelle, welche ausgebildet ist, eine Kommunikationsnachricht über den Kommunikationskanal zu empfangen, wobei die Kommunikationsnachricht einen transformierten Funktionsterm umfasst. Die Empfangsvorrichtung umfasst zudem einen Prozessor, welcher ausgebildet ist, den transformieren Funktionsterm unter Verwendung einer vorbestimmten Funktionalrücktransformation zu transformieren, um einen rücktransformierten Funktionsterm zu erhalten, und ein Referenzdatenpaket aus der Mehrzahl von Referenzdatenpaketen auszuwählen, wobei das ausgewählte Referenzdatenpaket einem Funktionsterm zugeordnet ist, welcher dem rücktransformierten Funktionsterm entspricht. Das ausgewählte Referenzdatenpaket bildet das empfangene Datenpaket.

Gemäß einer Ausführungsform ist der Prozessor ausgebildet, den transformierten Funktionsterm mittels eines Computeralgebrasystems, insbesondere mittels einer Programmbibliothek eines Computeralgebrasystems, symbolisch zu transformieren. Dadurch wird der Vorteil erreicht, dass die vorbestimmte Funktionalrücktransformation auch bei komplexen und umfangreichen transformierten Funktionstermen effizient durchgeführt werden kann.

Gemäß einer Ausführungsform ist die vorbestimmte Funktionalrücktransformation eine umkehrbare Funktionalrücktransformation. Dadurch wird der Vorteil erreicht, dass zu der Funktionalrücktransformation eine zugehörige Funktionaltransformation existiert.

Gemäß einer Ausführungsform ist die vorbestimmte Funktionalrücktransformation eine Integralrücktransformation. Dadurch wird der Vorteil erreicht, dass der rücktransformierte Funktionsterm effizient bestimmt werden kann.

Gemäß einer Ausführungsform ist die vorbestimmte Funktionalrücktransformation eine der folgenden Funktionalrücktransformationen: eine Wavelet-Rücktransformation, eine Fourier-Rücktransformation, eine Laplace-Rücktransformation, eine Sinus-Rücktransformation, oder eine Cosinus-Rücktransformation. Dadurch wird der Vorteil erreicht, dass die vorbestimmte Funktionalrücktransformation effizient implementiert werden kann.

Gemäß einer Ausführungsform ist die Empfangsvorrichtung ausgebildet, ein weiteres Datenpaket über den Kommunikationskanal zu empfangen, wobei die Kommunikationsnachricht einen transformierten weiteren Funktionsterm umfasst, wobei der Prozessor ausgebildet ist, den transformieren weiteren Funktionsterm unter Verwendung der vorbestimmten Funktionalrücktransformation zu transformieren, um einen rücktransformierten weiteren Funktionsterm zu erhalten, und ein weiteres Referenzdatenpaket aus der Mehrzahl von Referenzdatenpaketen auszuwählen, wobei das ausgewählte weitere Referenzdatenpaket einem Funktionsterm zugeordnet ist, welcher dem rücktransformierten weiteren Funktionsterm entspricht. Das ausgewählte weitere Referenzdatenpaket bildet das empfangene weitere Datenpaket. Dadurch wird der Vorteil erreicht, dass mittels einer Kommunikationsnachricht mehrere Datenpakete zugleich empfangen werden können.

Gemäß einer Ausführungsform ist der Prozessor ausgebildet, den transformierten weiteren Funktionsterm mittels eines Computeralgebrasystems, insbesondere mittels einer Programmbibliothek eines Computeralgebrasystems, symbolisch zu transformieren. Dadurch wird der Vorteil erreicht, dass die vorbestimmte Funktionalrücktransformation auch bei komplexen und umfangreichen transformierten weiteren Funktionstermen effizient durchgeführt werden kann.

Gemäß einer Ausführungsform ist der Prozessor ausgebildet, eine Anordnung, insbesondere eine Reihenfolge, des transformierte Funktionsterms und des transformierten weiteren Funktionsterms in der Kommunikationsnachricht gemäß eines vorbestimmten Rückveränderungsschemas zu verändern. Dadurch wird der Vorteil erreicht, dass das vorbestimmte Rückveränderungsschema und ein zugehöriges Veränderungsschema zusätzlich als geteiltes Geheimnis verwendet werden können.

Gemäß einem dritten Aspekt betrifft die Erfindung ein Kommunikationssystem zum Kommunizieren über einen Kommunikationskanal. Das Kommunikationssystem umfasst eine Übertragungsvorrichtung gemäß dem ersten Aspekt der Erfindung, und eine Empfangsvorrichtung gemäß dem zweiten Aspekt der Erfindung.

Der Kommunikationskanal kann beispielsweise durch eine Kommunikationsverbindung über ein Kommunikationsnetzwerk, beispielsweise das Internet, gebildet sein.

Gemäß einem vierten Aspekt betrifft die Erfindung ein Verfahren zum Betreiben einer Übertragungsvorrichtung zum Übertragen eines Datenpakets über einen Kommunikationskanal. Die Übertragungsvorrichtung umfasst einen Speicher, einen Prozessor und eine Kommunikationsschnittstelle. In dem Speicher ist eine Zuordnungstabelle gespeichert, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Das Verfahren umfasst ein Auswählen eines Funktionsterms aus der Mehrzahl von Funktionstermen durch den Prozessor, wobei der ausgewählte Funktionsterm einem Referenzdatenpaket zugeordnet ist, welches dem Datenpaket entspricht, ein Transformieren des ausgewählten Funktionsterms unter Verwendung einer vorbestimmten Funktionaltransformation durch den Prozessor, um einen transformierten Funktionsterm zu erhalten, ein Erzeugen einer Kommunikationsnachricht durch den Prozessor, wobei die Kommunikationsnachricht den transformierten Funktionsterm umfasst, und ein Aussenden der Kommunikationsnachricht über den Kommunikationskanal durch die Kommunikationsschnittstelle, um das Datenpaket über den Kommunikationskanal zu übertragen.

Das Verfahren kann durch die Übertragungsvorrichtung durchgeführt werden. Weitere Merkmale des Verfahrens resultieren unmittelbar aus den Merkmalen und der Funktionalität der Übertragungsvorrichtung.

Gemäß einem fünften Aspekt betrifft die Erfindung ein Verfahren zum Betreiben einer Empfangsvorrichtung zum Empfangen eines Datenpakets über einen Kommunikationskanal. Die Empfangsvorrichtung umfasst einen Speicher, eine Kommunikationsschnittstelle und einen Prozessor. In dem Speicher ist eine Zuordnungstabelle gespeichert, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Das Verfahren umfasst ein Empfangen einer Kommunikationsnachricht über den Kommunikationskanal durch die Kommunikationsschnittstelle, wobei die Kommunikationsnachricht einen transformierten Funktionsterm umfasst, ein Transformieren des transformieren Funktionsterms unter Verwendung einer vorbestimmten Funktionalrücktransformation durch den Prozessor, um einen rücktransformierten Funktionsterm zu erhalten, und ein Auswählen eines Referenzdatenpakets aus der Mehrzahl von Referenzdatenpaketen durch den Prozessor, wobei das ausgewählte Referenzdatenpaket einem Funktionsterm zugeordnet ist, welcher dem rücktransformierten Funktionsterm entspricht. Das ausgewählte Referenzdatenpaket bildet das empfangene Datenpaket.

Das Verfahren kann durch die Empfangsvorrichtung durchgeführt werden. Weitere Merkmale des Verfahrens resultieren unmittelbar aus den Merkmalen und der Funktionalität der Empfangsvorrichtung.

Gemäß einem sechsten Aspekt betrifft die Erfindung ein Computerprogramm mit einem Programmcode zum Ausführen des Verfahrens gemäß dem vierten Aspekt der Erfindung oder des Verfahrens gemäß dem fünften Aspekt der Erfindung.

Die Erfindung kann in Hardware und Software implementiert werden.

Weitere Ausführungsbeispiele werden Bezug nehmend auf die beiliegenden Zeichnungen näher erläutert. Es zeigen:
- Fig. 1: ein schematisches Diagramm einer Übertragungsvorrichtung zum Übertragen eines Datenpakets über einen Kommunikationskanal;
- Fig. 2: ein schematisches Diagramm einer Empfangsvorrichtung zum Empfangen eines Datenpakets über einen Kommunikationskanal;
- Fig. 3: ein schematisches Diagramm eines Kommunikationssystems zum Kommunizieren über einen Kommunikationskanal;
- Fig. 4: ein schematisches Diagramm eines Verfahrens zum Betreiben einer Übertragungsvorrichtung;
- Fig. 5: ein schematisches Diagramm eines Verfahrens zum Betreiben einer Empfangsvorrichtung;
- Fig. 6: ein schematisches Diagramm eines Kommunikationssystems zum Kommunizieren über einen Kommunikationskanal; und
- Fig. 7: ein schematisches Diagramm einer Mehrzahl von Datenpaketen mit einer Mehrzahl von ausgewählten Funktionstermen.

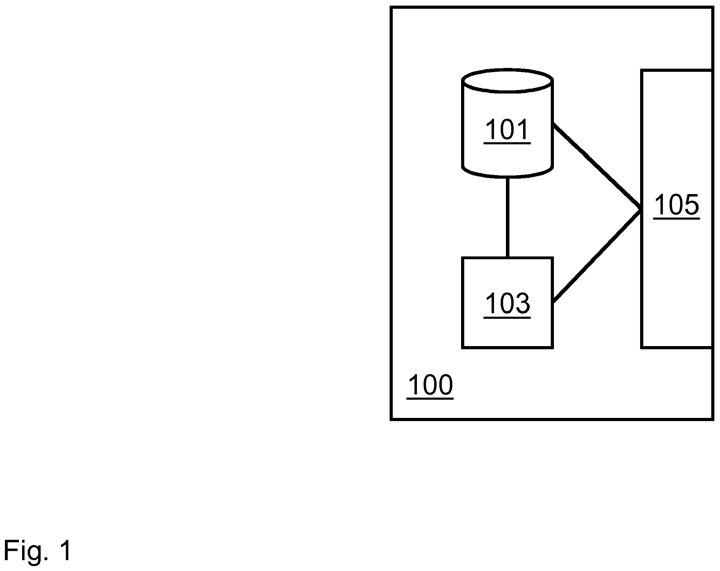

Fig. 1 zeigt ein schematisches Diagramm einer Übertragungsvorrichtung 100 zum Übertragen eines Datenpakets über einen Kommunikationskanal. Die Übertragungsvorrichtung 100 umfasst einen Speicher 101, in welchem eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Die Übertragungsvorrichtung 100 umfasst ferner einen Prozessor 103, welcher ausgebildet ist, einen Funktionsterm aus der Mehrzahl von Funktionstermen auszuwählen, wobei der ausgewählte Funktionsterm einem Referenzdatenpaket zugeordnet ist, welches dem Datenpaket entspricht, den ausgewählten Funktionsterm unter Verwendung einer vorbestimmten Funktionaltransformation zu transformieren, um einen transformierten Funktionsterm zu erhalten, und eine Kommunikationsnachricht zu erzeugen, wobei die Kommunikationsnachricht den transformierten Funktionsterm umfasst. Die Übertragungsvorrichtung 100 umfasst zudem eine Kommunikationsschnittstelle 105, welche ausgebildet ist, die Kommunikationsnachricht über den Kommunikationskanal auszusenden, um das Datenpaket über den Kommunikationskanal zu übertragen.

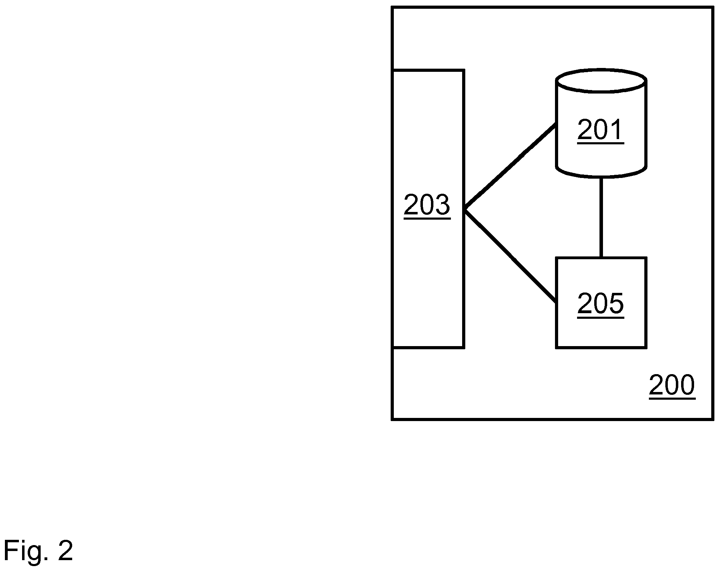

Fig. 2 zeigt ein schematisches Diagramm einer Empfangsvorrichtung 200 zum Empfangen eines Datenpakets über einen Kommunikationskanal. Die Empfangsvorrichtung 200 umfasst einen Speicher 201, in welchem eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Die Empfangsvorrichtung 200 umfasst ferner eine Kommunikationsschnittstelle 203, welche ausgebildet ist, eine Kommunikationsnachricht über den Kommunikationskanal zu empfangen, wobei die Kommunikationsnachricht einen transformierten Funktionsterm umfasst. Die Empfangsvorrichtung 200 umfasst zudem einen Prozessor 205, welcher ausgebildet ist, den transformieren Funktionsterm unter Verwendung einer vorbestimmten Funktionalrücktransformation zu transformieren, um einen rücktransformierten Funktionsterm zu erhalten, und ein Referenzdatenpaket aus der Mehrzahl von Referenzdatenpaketen auszuwählen, wobei das ausgewählte Referenzdatenpaket einem Funktionsterm zugeordnet ist, welcher dem rücktransformierten Funktionsterm entspricht. Das ausgewählte Referenzdatenpaket bildet das empfangene Datenpaket.

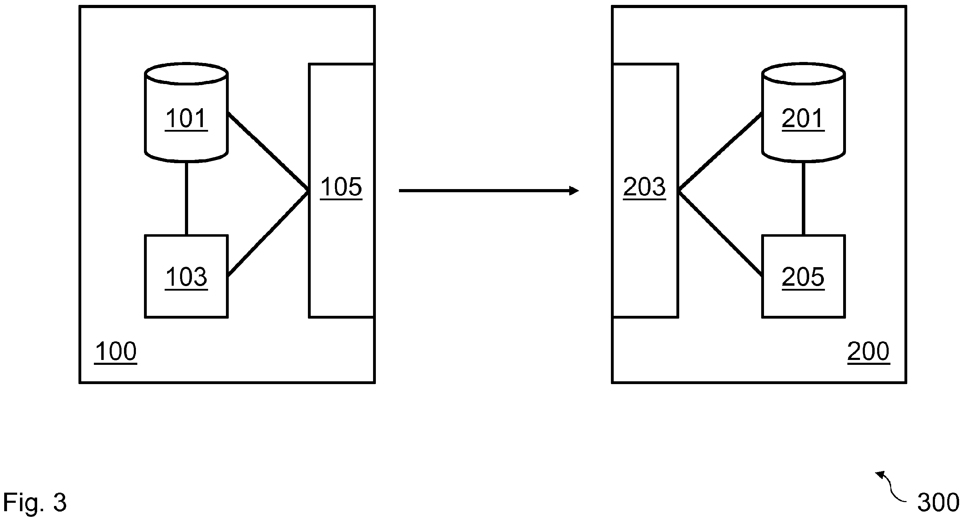

Fig. 3 zeigt ein schematisches Diagramm eines Kommunikationssystems 300 zum Kommunizieren über einen Kommunikationskanal. Das Kommunikationssystem 300 umfasst eine Übertragungsvorrichtung 100 und eine Empfangsvorrichtung 200.

Die Übertragungsvorrichtung 100 ist ausgebildet, ein Datenpaket über den Kommunikationskanal zu übertragen. Die Übertragungsvorrichtung 100 umfasst einen Speicher 101, in welchem eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Die Übertragungsvorrichtung 100 umfasst ferner einen Prozessor 103, welcher ausgebildet ist, einen Funktionsterm aus der Mehrzahl von Funktionstermen auszuwählen, wobei der ausgewählte Funktionsterm einem Referenzdatenpaket zugeordnet ist, welches dem Datenpaket entspricht, den ausgewählten Funktionsterm unter Verwendung einer vorbestimmten Funktionaltransformation zu transformieren, um einen transformierten Funktionsterm zu erhalten, und eine Kommunikationsnachricht zu erzeugen, wobei die Kommunikationsnachricht den transformierten Funktionsterm umfasst. Die Übertragungsvorrichtung 100 umfasst zudem eine Kommunikationsschnittstelle 105, welche ausgebildet ist, die Kommunikationsnachricht über den Kommunikationskanal auszusenden, um das Datenpaket über den Kommunikationskanal zu übertragen.

Die Empfangsvorrichtung 200 ist ausgebildet, das Datenpaket über den Kommunikationskanal zu empfangen. Die Empfangsvorrichtung 200 umfasst einen Speicher 201, in welchem eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Die Empfangsvorrichtung 200 umfasst ferner eine Kommunikationsschnittstelle 203, welche ausgebildet ist, die Kommunikationsnachricht über den Kommunikationskanal zu empfangen, wobei die Kommunikationsnachricht den transformierten Funktionsterm umfasst. Die Empfangsvorrichtung 200 umfasst zudem einen Prozessor 205, welcher ausgebildet ist, den transformieren Funktionsterm unter Verwendung einer vorbestimmten Funktionalrücktransformation zu transformieren, um einen rücktransformierten Funktionsterm zu erhalten, und ein Referenzdatenpaket aus der Mehrzahl von Referenzdatenpaketen auszuwählen, wobei das ausgewählte Referenzdatenpaket einem Funktionsterm zugeordnet ist, welcher dem rücktransformierten Funktionsterm entspricht. Das ausgewählte Referenzdatenpaket bildet das empfangene Datenpaket.

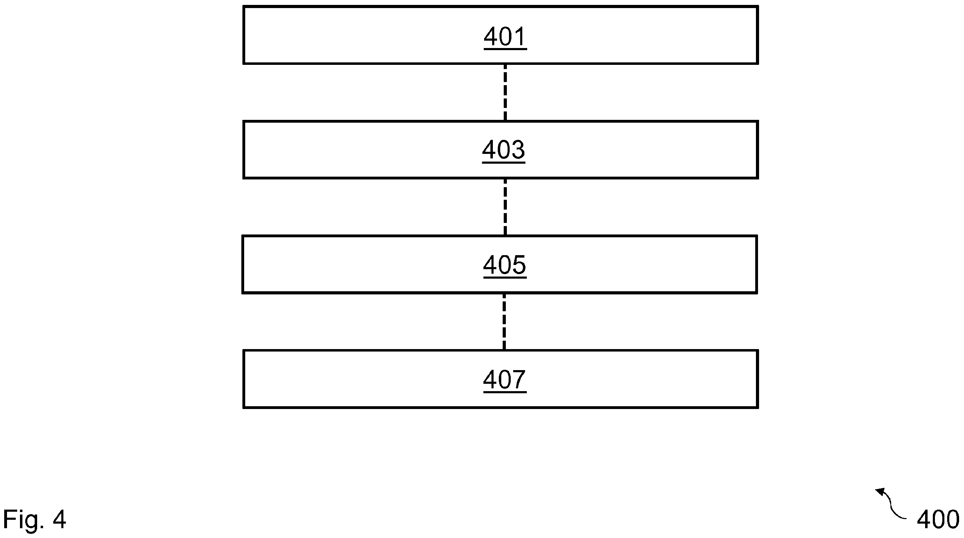

Fig. 4 zeigt ein schematisches Diagramm eines Verfahrens 400 zum Betreiben einer Übertragungsvorrichtung zum Übertragen eines Datenpakets über einen Kommunikationskanal. Die Übertragungsvorrichtung umfasst einen Speicher, einen Prozessor und eine Kommunikationsschnittstelle. In dem Speicher ist eine Zuordnungstabelle gespeichert, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Das Verfahren 400 umfasst ein Auswählen 401 eines Funktionsterms aus der Mehrzahl von Funktionstermen durch den Prozessor, wobei der ausgewählte Funktionsterm einem Referenzdatenpaket zugeordnet ist, welches dem Datenpaket entspricht, ein Transformieren 403 des ausgewählten Funktionsterms unter Verwendung einer vorbestimmten Funktionaltransformation durch den Prozessor, um einen transformierten Funktionsterm zu erhalten, ein Erzeugen 405 einer Kommunikationsnachricht durch den Prozessor, wobei die Kommunikationsnachricht den transformierten Funktionsterm umfasst, und ein Aussenden 407 der Kommunikationsnachricht über den Kommunikationskanal durch die Kommunikationsschnittstelle, um das Datenpaket über den Kommunikationskanal zu übertragen.

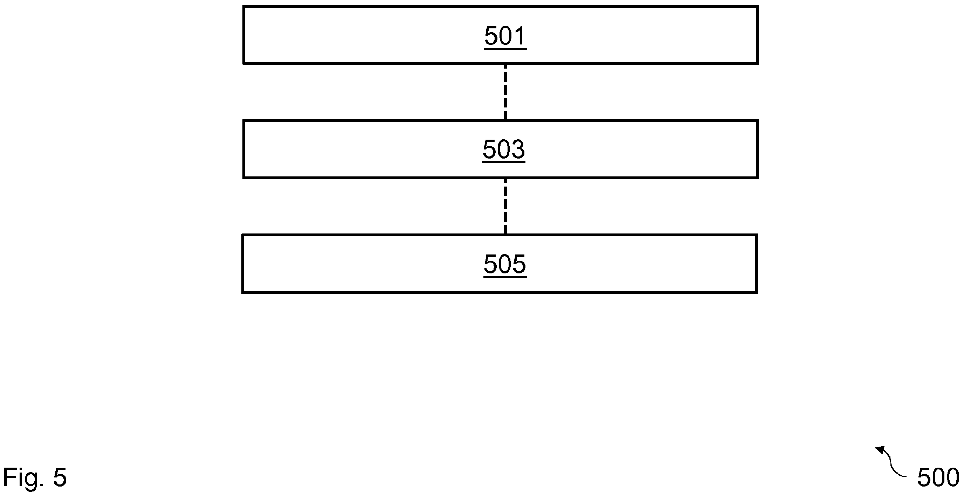

Fig. 5 zeigt ein schematisches Diagramm eines Verfahrens 500 zum Betreiben einer Empfangsvorrichtung zum Empfangen eines Datenpakets über einen Kommunikationskanal. Die Empfangsvorrichtung umfasst einen Speicher, eine Kommunikationsschnittstelle und einen Prozessor. In dem Speicher ist eine Zuordnungstabelle gespeichert, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert. Das Verfahren 500 umfasst ein Empfangen 501 einer Kommunikationsnachricht über den Kommunikationskanal durch die Kommunikationsschnittstelle, wobei die Kommunikationsnachricht einen transformierten Funktionsterm umfasst, ein Transformieren 503 des transformieren Funktionsterms unter Verwendung einer vorbestimmten Funktionalrücktransformation durch den Prozessor, um einen rücktransformierten Funktionsterm zu erhalten, und ein Auswählen 505 eines Referenzdatenpakets aus der Mehrzahl von Referenzdatenpaketen durch den Prozessor, wobei das ausgewählte Referenzdatenpaket einem Funktionsterm zugeordnet ist, welcher dem rücktransformierten Funktionsterm entspricht. Das ausgewählte Referenzdatenpaket bildet das empfangene Datenpaket.

Im Folgenden sollen weitere Ausführungsformen der Übertragungsvorrichtung 100, der Empfangsvorrichtung 200, des Kommunikationssystems 300 sowie der Verfahren 400 und 500 beispielhaft näher erläutert werden. Das beschriebene Konzept ermöglicht im Allgemeinen eine geschützte Übertragung eines Datenpakets über einen Kommunikationskanal. Insbesondere können große Datenpakete und/oder kompakt dargestellte Datenpakete effizient übertragen werden. Dadurch kann insbesondere eine symmetrische Verschlüsselung des zu übertragenden Datenpakets erreicht werden, welche beispielsweise gegenüber numerischen Angriffsverfahren mittels einer Statistikanalyse abgesichert sein kann. Dabei können ferner transzendente Zahlen verwendet werden.

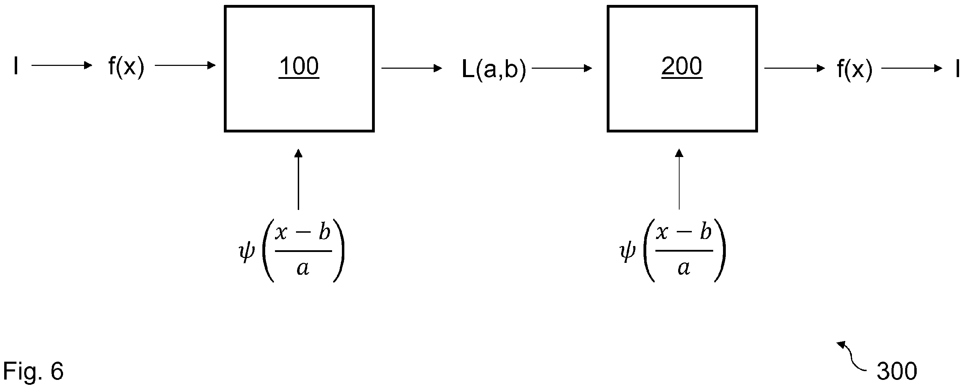

Fig. 6 zeigt ein schematisches Diagramm eines Kommunikationssystems 300 zum Kommunizieren über einen Kommunikationskanal. Das Kommunikationssystem 300 umfasst eine Übertragungsvorrichtung 100 und eine Empfangsvorrichtung 200.

Das Datenpaket repräsentiert abstrakt eine Information I, welche über den Kommunikationskanal übertragen werden soll. Durch die Zuordnung zwischen einer Mehrzahl von Funktionstermen und einer Mehrzahl von Referenzdatenpaketen, wobei sich die Funktionsterme beispielsweise jeweils durch einen konstanten Term n voneinander unterscheiden, kann für das zu übertragende Datenpaket eindeutig ein Funktionsterm ausgewählt werden, welcher das Datenpaket repräsentiert. Der konstante Term n ist typischerweise eine Zahl und hat unterschiedliche Werte für unterschiedliche Referenzdatenpakete. Die Abbildung des Datenpakets auf den zugehörigen Funktionsterm lässt sich abstrakt beispielsweise folgendermaßen veranschaulichen: $I \to n \to f \left(x\right)$

Die Mehrzahl von Funktionstermen kann beispielsweise jeweils durch einen gaußschen Funktionsterm gemäß der folgenden Gleichung gegeben sein, wobei unterschiedlichen Referenzdatenpaketen unterschiedliche konstante Terme n zugeordnet sind: $f \left(x\right) = {e}^{- \frac{1}{2} {nx}^{2}}$

Der ausgewählte Funktionsterm wird unter Verwendung der vorbestimmten Funktionstransformation in einen transformierten Funktionsterm transformiert. Die vorbestimmte Funktionaltransformation kann beispielsweise eine Wavelet-Transformation sein, wobei der transformierte Funktionsterm eine Wavelet-transformierte L(a,b) des ausgewählten Funktionsterms ist: $L \left(a, b\right) : = \frac{1}{\sqrt{c \left|a\right|}} {\int }_{- ∞}^{∞} f \left(x\right) ψ \left(\frac{x - b}{a}\right) dx$

Die vorbestimmte Funktionaltransformation kann beliebig gewählt werden. Die vorbestimmte Funktionaltransformation kann beispielsweise eine Integraltransformation, wie im vorstehenden Beispiel, sein. Wenn *ψ* unbekannt und L gegeben sind, so soll nicht auf f geschlossen werden können. Umgekehrt, wenn *ψ* und L bekannt sind, so soll auf f geschlossen werden können. Die zu übertragende Information wird somit durch f dargestellt. Eine Wavelet-Transformation als vorbestimmte Funktionaltransformation soll im Folgenden beispielhaft gezeigt werden. In diesem Beispiel ist die Mehrzahl von Funktionstermen durch einen exponentiellen Funktionsterm gegeben: $f \left(x\right) = {e}^{- nx}$

Für die Wavelet-Transformation wird der folgende Transformationskern verwendet: $ψ \left(\frac{x - b}{a}\right) = \left[1-{\left(\frac{x - b}{a}\right)}^{2}\right] {e}^{- {\left(x-\frac{b}{a}\right)}^{2}}$

Somit ergibt sich die Wavelet-Transformierte mathematisch wie folgt: $L \left(a, b\right) = \frac{1}{\sqrt{c \left|a\right|}} \left[\frac{\sqrt{π}}{\sqrt{1 + n}}\left[{b}^{2}\left(\frac{1}{{a}^{3} \left(1+n\right)}-\frac{1}{{a}^{4} {\left(1+n\right)}^{2}}-1\right)+1+\left(2\frac{b}{{a}^{2}}-\frac{1}{{a}^{2}}\right)\frac{\sqrt{π}}{2 {\left(n+1\right)}^{\frac{3}{2}}}\right]\right] {e}^{- \frac{1}{{a}^{2}} \left(1-\frac{1}{1 + n}\right) {b}^{2}}$

Um das Datenpaket aus dem übertragenen transformierten Funktionsterm zu rekonstruieren, kann eine Funktionalrücktransformation beispielsweise gemäß der folgenden Gleichung durchgeführt werden: $f \left(x\right) = \frac{1}{\sqrt{c}} {\int }_{- ∞}^{∞} {\int }_{- ∞}^{∞} L \left(a, b\right) ψ \left(\frac{x - b}{a}\right) {\left|a\right|}^{- \frac{1}{2}} \frac{dadb}{{a}^{2}}$

Die Abbildung des rücktransformierten Funktionsterms auf die Information I, welche durch das Datenpaket repräsentiert wird, lässt sich abstrakt folgendermaßen veranschaulichen: $f \left(x\right) \to n \to I$

Die Information I fließt somit direkt in einen ausgewählten Funktionsterm ein. Solange der Information eineindeutig ein konstanter Term n zugeordnet wird, ist auch der zugehörige ausgewählte Funktionsterm eineindeutig. Durch die vorbestimmte Funktionaltransformation kann im Allgemeinen ein komplizierter analytischer transformierter Funktionsterm erzeugt werden, welcher rekonstruierbar ist, wenn die vorbestimmte Funktionalrücktransformation bekannt ist.

Mit anderen Worten wird durch eine eineindeutige Zuordnungsvorschrift der Information I ein ausgewählter Funktionsterm zugeordnet, welcher mittels einer analytischen Funktionstransformation in einen sicheren analytischen transformierten Funktionsterm transformiert wird, welcher anschließend durch die Übertragungsvorrichtung 100 übertragen wird. Bei der Empfangsvorrichtung 200 wird mittels der zugehörigen Funktionalrücktransformation der ursprüngliche analytische Funktionsterm bestimmt. Aus diesem wird wieder die ursprüngliche Information I extrahiert.

Der Information I kann der konstante Term n beispielsweise unter Verwendung einer Hashfunktion zugeordnet sein. Der konstante Term n ist typischerweise Teil des ausgewählten Funktionsterms, beispielsweise als Exponent eines gaußschen Funktionsterms, wodurch eine eineindeutige Zuordnung der Information I zu dem ausgewählten Funktionsterm realisiert wird. Damit die Information I geschützt übertragen werden kann, wird diese mittels der vorbestimmten Funktionaltransformation in eine Form gebracht, aus welcher nicht unmittelbar ersichtlich ist, aus welchem Funktionsterm diese erzeugt wurde.

Im vorliegenden Beispiel wird in diesem Sinne aus dem Funktionsterm f(x) beispielhaft eine Wavelet-transformierte L(a,b) als transformierter Funktionsterm erzeugt. Der transformierte Funktionsterm L(a,b) wird dann von der Übertragungsvorrichtung 100 zur Empfangsvorrichtung 200 übertragen. Um aus dem übertragenen transformierten Funktionsterm L(a,b) wieder die relevante Information I zu extrahieren, wird der analytische Funktionsterm f(x) mittels einer Funktionalrücktransformation von L(a,b) zurückgewonnen. Dies kann dann korrekt erfolgen, wenn die entsprechende Funktionalrücktransformation bei der Empfangsvorrichtung 200 bekannt ist. Die Konstanten a und b können vorbestimmt sein. Aus dem rücktransformierten Funktionsterm kann der konstante Term n bestimmt werden, welcher die Information I repräsentieren kann. Beispielsweise kann hierfür der konstante Term n aus dem rücktransformierten Funktionsterm entnommen werden.

Um die korrekte Bestimmung des konstanten Terms n zusätzlich zu erschweren, kann der konstante Term n mit einer numerischen Repräsentation einer transzendenten Zahl verrechnet werden. In diesem Fall kann zusätzliches Wissen über die transzendente Zahl, beispielsweise die Kreiszahl *π*, relevant sein.

Da eine transzendente Zahl üblicherweise numerisch nicht korrekt dargestellt werden kann, sollte für die Extrahierung der Information I die verwendete numerische Repräsentation der transzendenten Zahl bekannt sein, um den konstanten Term n genau genug zu rekonstruieren. Hierbei ist insbesondere die Anzahl der verwendeten Nachkommastellen relevant. Im Folgenden ist ein solches Beispiel gezeigt, bei welchem der konstante Term n über drei verschiedene numerische Repräsentationen der Kreiszahl *π* verrechnet wird; in diesem Beispiel 22/7, 3,14 und 333/106. Ab der vierten Nachkommastelle unterscheiden sich die drei berechneten Zahlen, was bedeuten kann, dass die Information in den hinteren Nachkommastellen versteckt werden kann. Beispielhaft kann die Abbildung des konstanten Terms n auf die Information I mittels der transzendenten Zahl abstrakt folgendermaßen erfolgen: $f \left(x\right) = {e}^{- 3,51367 {x}^{2}} = n ⋅ π = a$

Folglich können sich folgende unterschiedliche Werte für den konstanten Term n ergeben: ${n}_{1} = \frac{a}{π} \approx \frac{7 a}{22} \approx 1,117985 \overline{90}$ ${n}_{2} = \frac{a}{π} \approx \frac{a}{3,14} \approx 1,119003184 …$ ${n}_{3} = \frac{a}{π} \approx \frac{106 a}{333} \approx 1,1184655 …$

Es zeigt sich, dass ${n}_{1} \neq {n}_{2} \neq {n}_{3} .$

Somit kann eine korrekte Repräsentation der Kreiszahl *π* wünschenswert sein, um den korrekten konstanten Term n und damit die korrekte Information I zu erhalten.

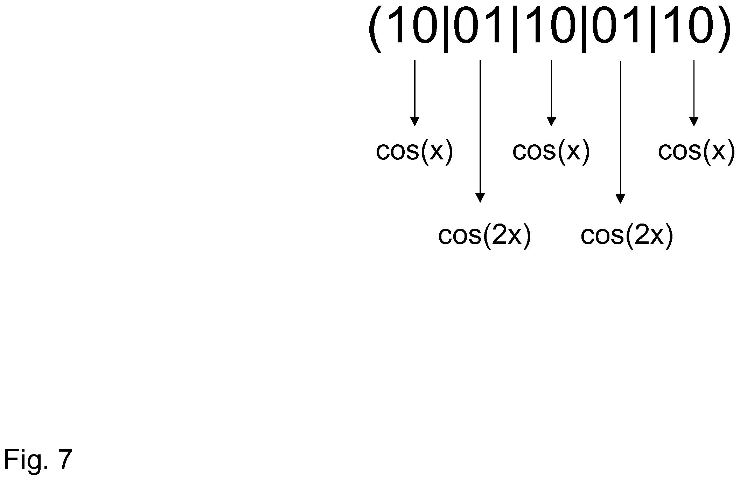

Fig. 7 zeigt ein schematisches Diagramm einer Mehrzahl von Datenpaketen mit einer Mehrzahl von ausgewählten Funktionstermen. Die Datenpakete umfassen jeweils binäre Datensymbole "0" und "1". Zuordnungstabellen für eine Zuordnung zwischen einer entsprechenden Mehrzahl von Referenzdatenpaketen und einer entsprechenden Mehrzahl von Funktionstermen können jeweils in der Übertragungsvorrichtung 100 und der Empfangsvorrichtung 200 gespeichert sein.

In diesem Beispiel wird für das Datenpaket "10" der Funktionsterm "cos(x)" ausgewählt und für das Datenpaket "01" der Funktionsterm "cos(2x)" ausgewählt. Auch für das Datenpaket "00" (nicht dargestellt) und das Datenpaket "11" (nicht dargestellt) können jeweils geeignete Funktionsterme ausgewählt werden, beispielsweise "sin(x)", oder "tanh(x)".

Die jeweils transformierten Funktionsterme können aufeinanderfolgend beispielsweise als Zeichenkette (engl. string) in einer Textdatei mit Dateiendung ".txt" gespeichert werden.

Zusätzlich kann mittels eines Veränderungsschemas sowie eines zugehörigen Rückveränderungsschemas eine Anordnung, insbesondere eine Reihenfolge der transformierten Funktionsterme innerhalb der Textdatei verändert werden. Das Veränderungsschema und das zugehörige Rückveränderungsschema bilden folglich weitere geteilte Geheimnisse zwischen der Übertragungsvorrichtung 100 und der Empfangsvorrichtung 200. Die Veränderung mittels des Veränderungsschemas kann beispielhaft mittels des Operators *P̂* dargestellt werden. Die Rückveränderung mittels des Rückveränderungsschemas kann beispielhaft mittels des Operators *P̂*⁻¹ dargestellt werden.

In einem Beispiel repräsentieren der Veränderungsoperator *P̂* und der Rückveränderungsoperator *P̂*⁻¹ eine Spiegelung an einer Mittenposition innerhalb der Textdatei gemäß: $\hat{P} \left[cos\left(x\right)cos\left(2x\right)cos\left(x\right)cos\left(2x\right)sin\left(x\right)\right] = sin \left(x\right) cos \left(2x\right) cos \left(x\right) cos \left(2x\right) cos \left(x\right)$ ${\hat{P}}^{- 1} \left[sin\left(x\right)cos\left(2x\right)cos\left(x\right)cos\left(2x\right)cos\left(x\right)\right] = cos \left(x\right) cos \left(2x\right) cos \left(x\right) cos \left(2x\right) sin \left(x\right)$

Durch das Veränderungsschema sowie das Rückveränderungsschema können jedoch auch beliebige andere Permutationen der transformierten Funktionsterme realisiert werden.

Alle in Verbindung mit einzelnen Ausführungsformen der Erfindung gezeigten oder beschriebenen Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Übertragungsvorrichtung
- 101: Speicher
- 103: Prozessor
- 105: Kommunikationsschnittstelle

- 200: Empfangsvorrichtung
- 201: Speicher
- 203: Kommunikationsschnittstelle
- 205: Prozessor

- 300: Kommunikationssystem

- 400: Verfahren zum Betreiben einer Übertragungsvorrichtung
- 401: Auswählen eines Funktionsterms
- 403: Transformieren des ausgewählten Funktionsterms
- 405: Erzeugen einer Kommunikationsnachricht
- 407: Aussenden der Kommunikationsnachricht

- 500: Verfahren zum Betreiben einer Empfangsvorrichtung
- 501: Empfangen einer Kommunikationsnachricht
- 503: Transformieren des transformieren Funktionsterms
- 505: Auswählen eines Referenzdatenpakets

## Patentansprüche

1. Übertragungsvorrichtung (100) zum Übertragen eines Datenpakets über einen Kommunikationskanal, mit:
einem Speicher (101), in welchem eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert;
einem Prozessor (103), welcher ausgebildet ist, einen Funktionsterm aus der Mehrzahl von Funktionstermen auszuwählen, wobei der ausgewählte Funktionsterm einem Referenzdatenpaket zugeordnet ist, welches dem Datenpaket entspricht, den ausgewählten Funktionsterm unter Verwendung einer vorbestimmten Funktionaltransformation zu transformieren, um einen transformierten Funktionsterm zu erhalten, und eine Kommunikationsnachricht zu erzeugen, wobei die Kommunikationsnachricht den transformierten Funktionsterm umfasst; und
einer Kommunikationsschnittstelle (105), welche ausgebildet ist, die Kommunikationsnachricht über den Kommunikationskanal auszusenden, um das Datenpaket über den Kommunikationskanal an eine Empfangsvorrichtung (200) zu übertragen, wobei die verwendete Funktionaltransformation und eine zugehörige Funktionalrücktransformation folglich ein geteiltes Geheimnis zwischen der Übertragungsvorrichtung (100) und der Empfangsvorrichtung (200) bilden, wodurch eine geschützte Übertragung des Datenpakets über den Kommunikationskanal möglich wird.

2. Übertragungsvorrichtung (100) nach Anspruch 1, wobei der Prozessor (103) ausgebildet ist, den ausgewählten Funktionsterm mittels eines Computeralgebrasystems, insbesondere mittels einer Programmbibliothek eines Computeralgebrasystems, symbolisch zu transformieren.

3. Übertragungsvorrichtung (100) nach einem der vorstehenden Ansprüche, wobei die vorbestimmte Funktionaltransformation eine der folgenden Funktionaltransformationen ist: eine Wavelet-Transformation, eine Fourier-Transformation, eine Laplace-Transformation, eine Sinus-Transformation, oder eine Cosinus-Transformation.

4. Übertragungsvorrichtung (100) nach einem der vorstehenden Ansprüche, wobei die Mehrzahl von Funktionstermen zumindest einen der folgenden Funktionsterme umfasst: einen exponentiellen Funktionsterm, einen gaußschen Funktionsterm, einen trigonometrischen Funktionsterm, einen hyperbolischen Funktionsterm, oder einen Polynomfunktionsterm.

5. Übertragungsvorrichtung (100) nach einem der vorstehenden Ansprüche, wobei die Übertragungsvorrichtung (100) ausgebildet ist, ein weiteres Datenpaket über den Kommunikationskanal zu übertragen, wobei der Prozessor (103) ausgebildet ist, einen weiteren Funktionsterm aus der Mehrzahl von Funktionstermen auszuwählen, wobei der ausgewählte weitere Funktionsterm einem Referenzdatenpaket zugeordnet ist, welches dem weiteren Datenpaket entspricht, den ausgewählten weiteren Funktionsterm unter Verwendung der vorbestimmten Funktionaltransformation zu transformieren, um einen transformierten weiteren Funktionsterm zu erhalten, wobei die Kommunikationsnachricht den transformierten weiteren Funktionsterm umfasst.

6. Übertragungsvorrichtung (100) nach Anspruch 5, wobei der Prozessor (103) ausgebildet ist, eine Anordnung, insbesondere eine Reihenfolge, des transformierten Funktionsterms und des transformierten weiteren Funktionsterms in der Kommunikationsnachricht gemäß eines vorbestimmten Veränderungsschemas zu verändern.

7. Übertragungsvorrichtung (100) nach einem der vorstehenden Ansprüche, wobei die Kommunikationsnachricht durch eine Binärdatei, insbesondere eine Binärdatei in einem vorbestimmten Binärformat, gebildet ist.

8. Empfangsvorrichtung (200) zum Empfangen eines Datenpakets über einen Kommunikationskanal, mit:
einem Speicher (201), in welchem eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert;
einer Kommunikationsschnittstelle (203), welche ausgebildet ist, eine Kommunikationsnachricht von einer Übertragungsvorrichtung (100) über den Kommunikationskanal zu empfangen, wobei die Kommunikationsnachricht einen transformierten Funktionsterm umfasst; und
einem Prozessor (205), welcher ausgebildet ist, den transformieren Funktionsterm unter Verwendung einer vorbestimmten Funktionalrücktransformation zu transformieren, um einen rücktransformierten Funktionsterm zu erhalten, und ein Referenzdatenpaket aus der Mehrzahl von Referenzdatenpaketen auszuwählen, wobei das ausgewählte Referenzdatenpaket einem Funktionsterm zugeordnet ist, welcher dem rücktransformierten Funktionsterm entspricht, wobei eine verwendete Funktionaltransformation und die zugehörige Funktionalrücktransformation folglich ein geteiltes Geheimnis zwischen der Übertragungsvorrichtung (100) und der Empfangsvorrichtung (200) bilden, wodurch eine geschützte Übertragung des Datenpakets über den Kommunikationskanal möglich wird.

9. Empfangsvorrichtung (200) nach Anspruch 8, wobei der Prozessor (205) ausgebildet ist, den transformierten Funktionsterm mittels eines Computeralgebrasystems, insbesondere mittels einer Programmbibliothek eines Computeralgebrasystems, symbolisch zu transformieren.

10. Empfangsvorrichtung (200) nach einem der Ansprüche 8 oder 9, wobei die Empfangsvorrichtung (200) ausgebildet ist, ein weiteres Datenpaket über den Kommunikationskanal zu empfangen, wobei die Kommunikationsnachricht einen transformierten weiteren Funktionsterm umfasst, wobei der Prozessor (205) ausgebildet ist, den transformieren weiteren Funktionsterm unter Verwendung der vorbestimmten Funktionalrücktransformation zu transformieren, um einen rücktransformierten weiteren Funktionsterm zu erhalten, und ein weiteres Referenzdatenpaket aus der Mehrzahl von Referenzdatenpaketen auszuwählen, wobei das ausgewählte weitere Referenzdatenpaket einem Funktionsterm zugeordnet ist, welcher dem rücktransformierten weiteren Funktionsterm entspricht.

11. Empfangsvorrichtung (200) nach Anspruch 10, wobei der Prozessor (205) ausgebildet ist, eine Anordnung, insbesondere eine Reihenfolge, des transformierte Funktionsterms und des transformierten weiteren Funktionsterms in der Kommunikationsnachricht gemäß eines vorbestimmten Rückveränderungsschemas zu verändern.

12. Kommunikationssystem (300) zum Kommunizieren über einen Kommunikationskanal, mit:
einer Übertragungsvorrichtung (100) nach einem der Ansprüche 1 bis 7; und
einer Empfangsvorrichtung (200) nach einem der Ansprüche 8 bis 11.

13. Verfahren (400) zum Betreiben einer Übertragungsvorrichtung (100) zum Übertragen eines Datenpakets über einen Kommunikationskanal, wobei die Übertragungsvorrichtung (100) einen Speicher (101), einen Prozessor (103) und eine Kommunikationsschnittstelle (105) umfasst, wobei in dem Speicher (101) eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert, mit:
Auswählen (401) eines Funktionsterms aus der Mehrzahl von Funktionstermen durch den Prozessor (103), wobei der ausgewählte Funktionsterm einem Referenzdatenpaket zugeordnet ist, welches dem Datenpaket entspricht;
Transformieren (403) des ausgewählten Funktionsterms unter Verwendung einer vorbestimmten Funktionaltransformation durch den Prozessor (103), um einen transformierten Funktionsterm zu erhalten;
Erzeugen (405) einer Kommunikationsnachricht durch den Prozessor (103), wobei die Kommunikationsnachricht den transformierten Funktionsterm umfasst; und
Aussenden (407) der Kommunikationsnachricht an eine Empfangsvorrichtung (200) über den Kommunikationskanal durch die Kommunikationsschnittstelle (105), um das Datenpaket über den Kommunikationskanal zu übertragen, wobei die verwendete Funktionaltransformation und eine zugehörige Funktionalrücktransformation folglich ein geteiltes Geheimnis zwischen der Übertragungsvorrichtung (100) und der Empfangsvorrichtung (200) bilden, wodurch eine geschützte Übertragung des Datenpakets über den Kommunikationskanal möglich wird.

14. Verfahren (500) zum Betreiben einer Empfangsvorrichtung (200) zum Empfangen eines Datenpakets über einen Kommunikationskanal, wobei die Empfangsvorrichtung (200) einen Speicher (201), eine Kommunikationsschnittstelle (203) und einen Prozessor (205) umfasst, wobei in dem Speicher (201) eine Zuordnungstabelle gespeichert ist, wobei die Zuordnungstabelle eine Zuordnung zwischen einer Mehrzahl von Funktionstermen und einer Mehrzahl von Referenzdatenpaketen anzeigt, wobei jeder Funktionsterm jeweils einen Funktionsverlauf repräsentiert, mit:
Empfangen (501) einer Kommunikationsnachricht von einer Übertragungsvorrichtung (100) über den Kommunikationskanal durch die Kommunikationsschnittstelle (203), wobei die Kommunikationsnachricht einen transformierten Funktionsterm umfasst;
Transformieren (503) des transformieren Funktionsterms unter Verwendung einer vorbestimmten Funktionalrücktransformation durch den Prozessor (205), um einen rücktransformierten Funktionsterm zu erhalten; und
Auswählen (505) eines Referenzdatenpakets aus der Mehrzahl von Referenzdatenpaketen durch den Prozessor (205), wobei das ausgewählte Referenzdatenpaket einem Funktionsterm zugeordnet ist, welcher dem rücktransformierten Funktionsterm entspricht, wobei eine verwendete Funktionaltransformation und die zugehörige Funktionalrücktransformation folglich ein geteiltes Geheimnis zwischen der Übertragungsvorrichtung (100) und der Empfangsvorrichtung (200) bilden, wodurch eine geschützte Übertragung des Datenpakets über den Kommunikationskanal möglich wird.

15. Computerprogramm mit einem Programmcode, welches, wenn auf einen Computer geladen, dazu ausgebildet ist, ein Verfahren gemäß Anspruch 13 oder ein Verfahren gemäß Anspruch 14 auszuführen.

## Claims

1. A transmission device (100) for transmitting a data packet via a communication channel, the transmission device comprising:
a memory (101) in which an allocation table is stored, the allocation table indicating an allocation between a plurality of function terms and a plurality of reference data packets, each function term respectively representing a function process;
a processor (103) which is configured to select a function term from the plurality of function terms, the selected function term being assigned to a reference data packet corresponding to the data packet, to transform the selected function term using a predetermined functional transformation in order to obtain a transformed function term and to generate a communication message, the communication message comprising the transformed function term; and
a communication interface (105) which is configured to send the communication message via the communication channel in order to transmit the data packet via the communication channel to a receiving device (200), the functional transformation used and an associated functional inverse transformation consequently forming a shared secret between the transmission device (100) and the receiving device (200), thereby enabling a protected transmission of the data packet via the communication channel.

2. The transmission device (100) according to claim 1, wherein the processor (103) is configured to symbolically transform the selected function term by means of a computer algebra system, in particular by means of a program library of a computer algebra system.

3. The transmission device (100) according to one of the preceding claims, wherein the predetermined functional transformation is one of the following functional transformations: a wavelet transformation, a Fourier transformation, a Laplace transformation, a sine transformation, or a cosine transformation.

4. The transmission device (100) according to one of the preceding claims, wherein the plurality of function terms comprises at least one of the following function terms: an exponential function term, a Gaussian function term, a trigonometric function term, a hyperbolic function term, or a polynomial function term.

5. The transmission device (100) according to one of the preceding claims, wherein the transmission device (100) is configured to transmit a further data packet via the communication channel, the processor (103) is configured to select a further function term from the plurality of function terms, wherein the selected further function term is assigned to a reference data packet which corresponds to the further data packet, to transform the selected further function term using the predetermined functional transformation in order to obtain a transformed further function term, the communication message including the transformed further function term.

6. The transmission device (100) according to claim 5, wherein the processor (103) is configured to change an arrangement, in particular an order, of the transformed function term and the transformed further function term in the communication message according to a predetermined scheme of change.

7. The transmission device (100) according to one of the preceding claims, wherein the communication message is formed by a binary file, in particular a binary file in a predetermined binary format.

8. A receiving device (200) for receiving a data packet via a communication channel, the receiving device comprising:
a memory (201) in which an assignment table is stored, the assignment table indicating an assignment between a plurality of function terms and a plurality of reference data packets, each function term respectively representing a function process;
a communication interface (203) which is configured to receive a communication message from a receiving device (200) via the communication channel, the communication message comprising a transformed function term; and
a processor (205) which is configured to transform the transformed function term using a predetermined functional inverse transformation in order to obtain an inverse transformed function term, and to select a reference data packet from the plurality of reference data packets, the selected reference data packet being assigned a function term which corresponds with the inverse transformed function term, a functional transformation used and the associated functional inverse transformation consequently forming a shared secret between the transmission device (100) and the receiving device (200), thereby enabling a protected transmission of the data packet via the communication channel.

9. The receiving device (200) according to claim 8, wherein the processor (205) is configured to symbolically transform the transformed function term by means of a computer algebra system, in particular by means of a program library of a computer algebra system.

10. The receiving device (200) according to one of claims 8 or 9, wherein the receiving device (200) is configured to receive a further data packet via the communication channel, wherein the communication message comprises a transformed further function term, wherein the processor (205) is configured to transform the transformed further function term using the predetermined functional inverse transformation in order to obtain an inverse transformed further function term, and to select a further reference data packet from the plurality of reference data packets, the selected further reference data packet being assigned to a function term which corresponds to the inverse transformed further function term.

11. The receiving device (200) according to claim 10, wherein the processor (205) is configured to change an arrangement, in particular a sequence, of the transformed function term and the transformed further function term in the communication message in accordance with a predetermined reverse scheme of change.

12. A communication system (300) for communicating via a communication channel, the communication system comprising:
a transmission device (100) according to any one of claims 1 to 7; and
a receiving device (200) according to any one of claims 8 to 11.

13. A method (400) for operating a transmission device (100) for transmitting a data packet via a communication channel, the transmission device (100) comprising a memory (101), a processor (103) and a communication interface (105), wherein in the memory (101) an assignment table is stored, the assignment table indicating an assignment between a plurality of function terms and a plurality of reference data packets, each function term representing a function process, the method comprising:
Selecting (401) a function term from the plurality of function terms by the processor (103), the selected function term being assigned to a reference data packet which corresponds to the data packet;
Transforming (403) the selected function term using a predetermined functional transformation by the processor (103) to obtain a transformed function term;
Generating (405) a communication message by the processor (103), the communication message comprising the transformed function term; and
Sending (407) the communication message to a receiving device (200) via the communication channel through the communication interface (105) in order to transmit the data packet via the communication channel, the functional transformation used and an associated functional inverse transformation consequently forming a shared secret between the transmission device (100) and the receiving device (200), thereby enabling a protected transmission of the data packet via the communication channel.

14. A method (500) for operating a receiving device (200) for receiving a data packet via a communication channel, the receiving device (200) comprising a memory (201), a communication interface (203) and a processor (205), wherein in the memory (201) an assignment table is stored, the assignment table indicating an assignment between a plurality of function terms and a plurality of reference data packets, each function term representing a function sequence, the method comprising:
Receiving (501) a communication message from a receiving device (200) via the communication channel through the communication interface (203), the communication message comprising a transformed function term;
Transforming (503) the transformed function term using a predetermined functional inverse transformation by the processor (205) to obtain an inverse transformed function term; and
Selecting (505) a reference data packet from the plurality of reference data packets by the processor (205), the selected reference data packet being assigned to a function term which corresponds to the reverse-transformed function term, a functional transformation used and the associated functional reverse-transformation consequently forming a shared secret between the transmission device (100) and the receiving device (200), thereby enabling a protected transmission of the data packet via the communication channel.

15. A computer program with a program code, which is configured to execute a method according to claim 13 or a method according to claim 14 when loaded on a computer.

## Revendications

1. Dispositif de transmission (100) permettant de transmettre un paquet de données sur un canal de communication, comprenant :
une mémoire (101) dans laquelle est stockée une table d'affectation, la table d'affectation indiquant une affectation entre une pluralité de termes de fonction et une pluralité de paquets de données de référence, chaque terme de fonction représentant une variation de fonction respectivement ;
un processeur (103) qui est réalisé pour sélectionner un terme de fonction parmi la pluralité de termes de fonction, le terme de fonction sélectionné étant affecté à un paquet de données de référence qui correspond au paquet de données, pour transformer le terme de fonction sélectionné en utilisant une transformation fonctionnelle prédéterminée afin d'obtenir un terme de fonction transformé, et pour générer un message de communication, le message de communication comprenant le terme de fonction transformé ; et
une interface de communication (105) qui est réalisée pour envoyer le message de communication sur le canal de communication afin de transmettre le paquet de données sur le canal de communication à un dispositif de réception (200), dans lequel la transformation fonctionnelle utilisée et une transformation fonctionnelle inverse associée constituent donc un secret partagé entre le dispositif de transmission (100) et le dispositif de réception (200) ce qui permet une transmission protégée du paquet de données sur le canal de communication.

2. Dispositif de transmission (100) selon la revendication 1, dans lequel le processeur (103) est réalisé pour transformer symboliquement le terme de fonction sélectionné au moyen d'un système algébrique informatique, en particulier au moyen d'une bibliothèque de programmes d'un système algébrique informatique.

3. Dispositif de transmission (100) selon l'une quelconque des revendications précédentes, dans lequel la transformation fonctionnelle prédéterminée est l'une des transformations fonctionnelles suivantes : une transformation d'ondelettes, une transformation de Fourier, une transformation de Laplace, une transformation sinusoïdale ou une transformation cosinusoïdale.

4. Dispositif de transmission (100) selon l'une quelconque des revendications précédentes, dans lequel la pluralité de termes de fonction comprend au moins l'un des termes de fonction suivants : un terme de fonction exponentiel, un terme de fonction gaussien, un terme de fonction trigonométrique, un terme de fonction hyperbolique ou un terme de fonction polynomial.

5. Dispositif de transmission (100) selon l'une quelconque des revendications précédentes, le dispositif de transmission (100) étant réalisé pour transmettre un paquet de données supplémentaire sur le canal de communication, dans lequel le processeur (103) est réalisé pour sélectionner un terme de fonction supplémentaire parmi la pluralité de termes de fonction, le terme de fonction supplémentaire sélectionné étant affecté à un paquet de données de référence qui correspond au paquet de données supplémentaire, pour transformer le terme de fonction supplémentaire sélectionné en utilisant la transformation fonctionnelle prédéterminée afin d'obtenir un terme de fonction supplémentaire transformé, le message de communication comprenant le terme de fonction supplémentaire transformé.

6. Dispositif de transmission (100) selon la revendication 5, dans lequel le processeur (103) est réalisé pour modifier une disposition, en particulier un ordre, du terme de fonction transformé et du terme de fonction supplémentaire transformé dans le message de communication selon un schéma de modification prédéterminé.

7. Dispositif de transmission (100) selon l'une quelconque des revendications précédentes, dans lequel le message de communication est formé par un fichier binaire, en particulier un fichier binaire d'un format binaire prédéterminé.

8. Dispositif de réception (200) permettant de recevoir un paquet de données sur un canal de communication, comprenant :
une mémoire (201) dans laquelle est stockée une table d'affectation, la table d'affectation indiquant une affectation entre une pluralité de termes de fonction et une pluralité de paquets de données de référence, chaque terme de fonction représentant une variation de fonction respectivement ;
une interface de communication (203) qui est réalisée pour recevoir un message de communication d'un dispositif de transmission (100) sur le canal de communication, le message de communication comprenant un terme de fonction transformé ; et
un processeur (205) qui est réalisé pour transformer le terme de fonction transformé en utilisant une transformation fonctionnelle inverse prédéterminée afin d'obtenir un terme de fonction inverse, et pour sélectionner un paquet de données de référence parmi la pluralité de paquets de données de référence, le paquet de données de référence sélectionné étant affecté à un terme de fonction qui correspond au terme de fonction inverse, dans lequel une transformation fonctionnelle utilisée et la transformation fonctionnelle inverse associée constituent donc un secret partagé entre un dispositif de transmission (100) et le dispositif de réception (200) ce qui permet une transmission protégée du paquet de données sur le canal de communication.

9. Dispositif de réception (200) selon la revendication 8, dans lequel le processeur (205) est réalisé pour transformer symboliquement le terme de fonction transformé au moyen d'un système algébrique informatique, en particulier au moyen d'une bibliothèque de programmes d'un système algébrique informatique.

10. Dispositif de réception (200) selon l'une quelconque des revendications 8 ou 9, le dispositif de réception (200) étant réalisé pour recevoir un paquet de données supplémentaire sur le canal de communication, le message de communication comprenant un terme de fonction supplémentaire transformé, dans lequel le processeur (205) est réalisé pour transformer le terme de fonction supplémentaire transformé en utilisant la transformation fonctionnelle inverse prédéterminée afin d'obtenir un terme de fonction supplémentaire inverse, et pour sélectionner un paquet de données de référence supplémentaire parmi la pluralité de paquets de données de référence, le paquet de données de référence supplémentaire sélectionné étant affecté à un terme de fonction qui correspond au terme de fonction supplémentaire inverse.

11. Dispositif de réception (200) selon la revendication 10, dans lequel le processeur (205) est réalisé pour modifier une disposition, en particulier un ordre, du terme de fonction transformé et du terme de fonction supplémentaire transformé dans le message de communication selon un schéma de modification inverse prédéterminé.

12. Système de communication (300) permettant de communiquer sur un canal de communication, comprenant :
un dispositif de transmission (100) selon l'une quelconque des revendications 1 à 7 ; et
un dispositif de réception (200) selon l'une quelconque des revendications 8 à 11.

13. Procédé (400) d'exploitation d'un dispositif de transmission (100) permettant de transmettre un paquet de données sur un canal de communication, le dispositif de transmission (100) comprenant une mémoire (101), un processeur (103) et une interface de communication (105), une table d'affectation étant stockée dans la mémoire (101), la table d'affectation indiquant une affectation entre une pluralité de termes de fonction et une pluralité de paquets de données de référence, chaque terme de fonction représentant une variation de fonction respectivement, comprenant les étapes consistant à :
sélectionner (401) un terme de fonction parmi la pluralité de termes de fonction par le processeur (103), le terme de fonction sélectionné étant affecté à un paquet de données de référence qui correspond au paquet de données ;
transformer (403) le terme de fonction sélectionné en utilisant une transformation fonctionnelle prédéterminée par le processeur (103) afin d'obtenir un terme de fonction transformé ;
générer (405) un message de communication par le processeur (103), le message de communication comprenant le terme de fonction transformé ; et
envoyer (407) le message de communication à un dispositif de réception (200) sur le canal de communication par l'interface de communication (105) afin de transmettre le paquet de données sur le canal de communication, dans lequel la transformation fonctionnelle utilisée et une transformation fonctionnelle inverse associée constituent donc un secret partagé entre le dispositif de transmission (100) et le dispositif de réception (200) ce qui permet une transmission protégée du paquet de données sur le canal de communication.

14. Procédé (500) d'exploitation d'un dispositif de réception (200) permettant de recevoir un paquet de données sur un canal de communication, le dispositif de réception (200) comprenant une mémoire (201), une interface de communication (203) et un processeur (205), une table d'affectation étant stockée dans la mémoire (201), la table d'affectation indiquant une affectation entre une pluralité de termes de fonction et une pluralité de paquets de données de référence, chaque terme de fonction représentant une variation de fonction respectivement, comprenant les étapes consistant à :
recevoir (501) un message de communication d'un dispositif de transmission (100) sur le canal de communication par l'interface de communication (203), le message de communication comprenant un terme de fonction transformé ;
transformer (503) le terme de fonction transformé en utilisant une transformation fonctionnelle inverse prédéterminée par le processeur (205) afin d'obtenir un terme de fonction inverse ; et
sélectionner (505) un paquet de données de référence parmi la pluralité de paquets de données de référence par le processeur (205), le paquet de données de référence sélectionné étant affecté à un terme de fonction qui correspond au terme de fonction inverse, dans lequel une transformation fonctionnelle utilisée et la transformation fonctionnelle inverse associée constituent donc un secret partagé entre le dispositif de transmission (100) et le dispositif de réception (200) ce qui permet une transmission protégée du paquet de données sur le canal de communication.

15. Programme informatique comprenant un code programme qui est réalisé, lorsqu'il est chargé sur un ordinateur, pour exécuter un procédé selon la revendication 13 ou un procédé selon la revendication 14.
